# EUROPÄISCHE PATENTSCHRIFT

(11) **EP 3 870 958 B1**
(45) Veröffentlichungstag und Bekanntmachung des Hinweises auf die Patenterteilung: **26.11.2025**
(21) Anmeldenummer: 19768695.9
(22) Anmeldetag: 04.09.2019
(51) Int. Cl.: G01N 21/88, B01D 1/16, G01B 11/24, G01N 21/958

(54) **VORRICHTUNG UND VERFAHREN ZUR INSPEKTION VON SPIEGELNDEN OBERFLÄCHEN**
DEVICE AND METHOD FOR INSPECTING REFLECTIVE SURFACES
DISPOSITIF ET PROCÉDÉ D'INSPECTION DE SURFACES RÉFLÉCHISSANTES

(30) Priorität: 25.10.2018 AT 509272018
(43) Veröffentlichungstag der Anmeldung: 01.09.2021
(73) Patentinhaber: Nextsense GmbH, 8053 Graz (AT)
(72) Erfinder: LUTTENBERGER, Eduard, 8081 Heiligenkreuz am Waasen (AT); GASSER, Clemens, 8045 Graz (AT); NIEL, Albert, 8047 Graz (AT)
(74) Vertreter: Wirnsberger & Lerchbaum Patentanwälte OG
(86) Internationale Anmeldenummer: PCT/AT2019/060287
(87) Internationale Veröffentlichungsnummer: WO 2020/082099

(56) Entgegenhaltungen:
- EP-A1- 2 908 093
- EP-A1- 3 306 235
- DE-A1- 19 755 643
- JP-A- 2005 249 487

## Beschreibung

Die Erfindung betrifft eine Vorrichtung zur Inspektion einer Oberfläche eines Objektes, insbesondere einer spiegelnden oder transparenten Oberfläche, umfassend eine Beleuchtungseinrichtung, mit welcher die Oberfläche beleuchtbar ist, eine Messeinrichtung, welche an der Oberfläche reflektiertes Licht erfasst, und eine Bedampfungseinrichtung, welche zum Bedampfen der Oberfläche ausgebildet ist, wobei die Bedampfungseinrichtung eine Düse, eine Verdampfungskammer mit einer Einhausung und eine Heizeinrichtung aufweist.

Weiter betrifft die Erfindung eine Verwendung einer derartigen Vorrichtung.

Darüber hinaus betrifft die Erfindung ein Verfahren zur Inspektion einer Oberfläche eines Objektes, insbesondere von einer spiegelnden oder transparenten Oberfläche, bevorzugt mit einer erfindungsgemäßen Vorrichtung, wobei die Oberfläche beleuchtet, ein an der Oberfläche reflektiertes Licht mit einer Messeinrichtung erfasst und die Oberfläche mittels einer Bedampfungseinrichtung bedampft wird, um eine Schicht aus Flüssigkeitströpfchen auf dieser zu erzeugen, wobei eine Flüssigkeit in eine Verdampfungskammer mit einer Einhausung eingebracht wird.

Aus dem Stand der Technik sind Vorrichtungen zur Inspektion von spiegelnden Oberflächen von Objekten bekannt, welche zur Überprüfung von Karosserieteilen, Scheinwerfern, Außenspiegeln und dergleichen geeignet sind. So offenbaren die Dokumente DE 195 06 642 C1, EP 2 908 093 A1, DE 101 08 221 A1 und DE 10 2004 025 490 A1 jeweils Vorrichtungen und Verfahren zur optischen Erfassung von transparenten Objekten, wobei jeweils für zumindest eine Dauer einer Messung ein homogener Überzug aus Flüssigkeitströpfchen auf die Objektoberfläche aufgebracht wird.

Nachteilig ist hierbei, dass eine Flüssigkeit zerstäubt und direkt auf die Oberfläche aufgebracht wird, um so einen Überzug aus einzelnen Flüssigkeitströpfchen auf der Oberfläche zu erzeugen. Alternativ ist vorgesehen, dass die Flüssigkeit in einem separaten Kessel erhitzt und der so erzeugte Dampf einer Bedampfungseinrichtung durch beispielsweise Leitungen zugeführt wird. Dadurch ist es schwierig, eine ideale Tröpfchengröße einzustellen, um einen für eine Messung geeigneten homogenen Überzug aus Flüssigkeitströpfchen auf der Oberfläche des Objektes zu erzeugen.

Darüber hinaus muss der Dampf, welcher in einem separaten Kessel erzeugt wird, durch eine Leitung bis zur Bedampfungseinrichtung oder bis zum Objekt geführt werden. Damit der Dampf nicht bereits in der Leitung kondensiert, ist es erforderlich, dass der Dampf eine besonders hohe Temperatur aufweist und gegebenenfalls die Leitung ebenfalls erhitzt wird, was einen zusätzlichen technischen Aufwand bedeutet.

Überdies hat sich für das Bedampfen der Oberfläche zum Erzeugen eines Überzuges herausgestellt, dass die Qualität des Überzuges unter anderem von einer Tröpfchengröße beim Erzeugen des Dampfes abhängig ist, weshalb nicht jede beliebige Bedampfungseinrichtung bzw. Einrichtung zur Erzeugung eines Dampfes für eine derartige Inspektion geeignet ist.

Das Dokument JP 2005-249487 A offenbart eine gattungsgemäße Vorrichtung, mit welcher Dampf an einer Heizplatte generiert wird. Die Vorrichtung weist einen längeren Kanal auf, über welchen der generierte Dampf austragen wird, um an einer spiegelnden Oberfläche eines Objektes kondensiert zu werden. Durch diffuse Reflexion an der Oberfläche kann die Geometrie des Objektes bestimmt werden.

Das Dokument EP 3 306 235 A1 offenbart eine Vorrichtung zum Inspizieren von Oberflächen, wobei feuchte Luft auf eine Oberfläche eines zu inspizierenden Gegenstandes aufgebracht wird, wobei der Gegenstand gekühlt wird. Über eine Reflexion an der Oberfläche wird der Gegenstand untersucht.

Das Dokument DE 197 55 643 A1 offenbart eine Vorrichtung zum Verdampfen von Flüssigkeit, um ein Gas-Dampf-Gemisch herzustellen, wobei ein Feinzerstäuber vorgesehen ist, mit dem innerhalb eines Gehäuses das Gemisch hergestellt und aus diesem über einen Einlass ausgetragen wird.

Aufgabe der Erfindung ist es, eine Vorrichtung der eingangs genannten Art anzugeben, welche eine effiziente Inspektion von transparenten oder spiegelnden Oberflächen ermöglicht und gleichzeitig auf geringem Bauraum realisierbar ist.

Weitere Aufgabe der Erfindung ist es, eine Verwendung einer solchen Vorrichtung anzugeben.

Ferner ist es Aufgabe der Erfindung, ein Verfahren der eingangs genannten Art anzugeben, mit welchem spiegelnde oder transparente Oberflächen möglichst effizient inspiziert werden können.

Die erste Aufgabe wird erfindungsgemäß mit einer Vorrichtung nach Anspruch 1 gelöst.

Ein dadurch erzielter Vorteil ist insbesondere darin zu sehen, dass der Dampf direkt in der Bedampfungseinrichtung erzeugt werden kann und somit keine Zuleitung für den Dampf erforderlich ist. Der Dampf entsteht direkt in der Verdampfungskammer und kann durch den Dampfauslass unmittelbar auf die Oberfläche des Objektes aufgebracht werden. Im Wesentlichen ist der Dampfauslass als, beispielsweise rohrförmige, Öffnung in der Einhausung ausgebildet. Eine Temperatur des Dampfes kann somit im Vergleich zu einem Dampf, der beispielsweise in einem Kessel erzeugt wird, gering gehalten werden, da dieser keinen langen Weg von der Verdampfungskammer bzw. dem Kessel bis hin zur Oberfläche des Objektes überdauern muss. Der so erzeugte Dampf kann an der Oberfläche des Objektes kondensieren, um einen homogenen Überzug aus Flüssigkeitströpfchen auszubilden. Ferner hält der Überzug lange genug, um eine für die Inspektion erforderliche optische Messung durchzuführen. Nach der Messung verschwindet der Überzug von selbst, da die Flüssigkeitströpfchen evaporieren. Somit können mit einer derartigen Vorrichtung beispielsweise lackierte Karosserieteile, Außenspiegel, Scheinwerfer und dergleichen inspiziert werden. Eine derartige Inspektion umfasst in der Regel eine Profilvermessung und gegebenenfalls ein Überprüfen auf Kratzer oder andere Defekte bzw. Produktionsfehler.

Darüber hinaus kann die Vorrichtung einen Roboterarm, an welchem die Beleuchtungseinrichtung, die Messeinrichtung und/oder die Bedampfungseinrichtung angeordnet sind, umfassen oder an einem solchen montiert sein. Alternativ können die Beleuchtungseinrichtung, die Messeinrichtung und/oder die Bedampfungseinrichtung ortsfest positioniert sein. Hierbei kann der Roboterarm vorgesehen sein, das Objekt für eine Messung bzw. Inspektion zu positionieren. Ein weiterer Vorteil ist insbesondere darin zu sehen, dass eine derartige Vorrichtung miniaturisiert und/oder tragbar ausgebildet sein kann. Die Messeinrichtung kann beispielsweise zum Erfassen einzelner Daten oder zum Erfassen von Bildern ausgebildet sein. Üblicherweise umfasst die Messung ein Beleuchten mittels Beleuchtungseinrichtung, das Bedampfen mittels Bedampfungseinrichtung und das Erfassen mittels Messeinrichtung. Hierfür umfasst die Messeinrichtung in der Regel eine Kamera. Die Inspektion kann darüber hinaus eine Auswertung von gemessenen Daten oder erfassten Bildern umfassen.

Bevorzugt ist vorgesehen, dass die Beleuchtungseinrichtung einen Lichtstrahl bereitstellt, der zur Messung justierbar ist. Alternativ kann auch vorgesehen sein, dass die Beleuchtungseinrichtung mehrere Lichtstrahlen bereitstellt. Die Beleuchtungseinrichtung kann hierfür beispielsweise mehrere Lichtquellen umfassen. In der Regel sind der Lichtstrahl oder die Lichtstrahlen so justierbar, dass diese während der Messung auf die Oberfläche gerichtet sind. Es ist weiter günstig, wenn die Beleuchtungseinrichtung zur Bereitstellung von monochromatischem Licht ausgebildet ist. Hierfür kann die Beleuchtungseinrichtung eine oder mehrere Laserlichtquellen umfassen. Statt oder zusätzlich zur Laserlichtquelle kann auch eine andere Lichtquelle, welche beispielsweise weißes Licht bereitstellt, insbesondere mit einer parallelisierenden Optik und vorzugsweise einem Monochromator vorgesehen sein. Die Messeinrichtung ist bevorzugt zur Erfassung eines oder mehrerer an der Oberfläche des Objektes reflektierte Lichtstrahlen ausgebildet.

Erfindungsgemäß ist die Heizeinrichtung zur Erwärmung der Einhausung positioniert. Die Einhausung der Verdampfungskammer umfasst hierfür zweckmäßigerweise ein wärmeleitfähiges Material. Somit kann Wärme auf die gesamte Einhausung der Verdampfungskammer verteilt werden. Dadurch ist einerseits eine effiziente Erwärmung der in die Verdampfungskammer eingebrachten Flüssigkeit ermöglicht. Andererseits ist durch ein homogenes Erwärmen der gesamten Einhausung gewährleistet, dass der Dampf nicht bereits innerhalb der Verdampfungskammer, beispielsweise am Dampfauslass, kondensiert.

Es ist weiter günstig, wenn die Heizeinrichtung zumindest ein rohr- und/oder zylinderförmiges Heizelement umfasst. Dadurch ist gewährleistet, dass die Heizeinrichtung die Verdampfungskammer zumindest teilweise umschließt. Hierbei kann vorgesehen sein, dass eine Innenwand zwischen der Heizeinrichtung bzw. dem zumindest einen Heizelement und einem Innenraum der Verdampfungskammer angeordnet ist. Alternativ dazu kann vorgesehen sein, dass das zumindest eine Heizelement selbst die Innenwand oder einen Teil der Innenwand ausbildet. Bevorzugt ist das zumindest eine Heizelement in die Einhausung der Verdampfungskammer integriert. Üblicherweise umfasst die Einhausung die Innenwand und eine Außenwand, wobei das zumindest eine Heizelement im Wesentlichen von der Innenwand und der Außenwand flankiert ist. Ferner kann vorgesehen sein, dass mehrere zylinderförmige Heizelemente in der Einhausung bzw. zwischen der Innenwand und der Außenwand angeordnet sind. Hierfür kann vorgesehen sein, dass die Heizelemente in entsprechende zylinderförmige Ausnehmungen in der Einhausung eingeschoben sind.

Mit Vorteil ist vorgesehen, dass die Düse zumindest einen Sprühauslass aufweist, welcher im Wesentlichen senkrecht zur Längsachse der Düse angeordnet ist. Es hat sich bewährt, wenn der Sprühauslass umlaufend ausgebildet ist, sodass die Flüssigkeit im Wesentlichen radial abgesprüht und dadurch auf die Innenwand der Verdampfungskammer aufgebracht wird. Alternativ dazu kann eine Vielzahl von Sprühauslässen an einem Ende der Düse radial umlaufend angeordnet sein. Normalerweise ist die Düse so ausgebildet, dass die Flüssigkeit beim Einbringen in die Verdampfungskammer zerstäubt wird. Darüber hinaus kann vorgesehen sein, dass die Düse einen Sprühwinkel aufweist, welcher ein großflächiges Benetzen der Innenwand ermöglicht. Zweckmäßigerweise ist die Düse so ausgebildet, dass bei einem Zerstäuben der Flüssigkeit eine Tröpfchengröße von weniger als 5 µm erreicht wird.

Vorteilhaft ist es, wenn die Düse und der Dampfauslass an gegenüberliegenden Seiten der Verdampfungskammer angeordnet sind. Dadurch kann die Flüssigkeit von einer Seite in die Verdampfungskammer eingebracht, an der Innenwand der Verdampfungskammer verdampft und an einer zweiten Seite als Dampf aus der Verdampfungskammer herausgeführt werden.

Um eine einfache Konstruktion zu ermöglichen, kann vorgesehen sein, dass die Verdampfungskammer zylinderförmig ausgebildet ist, wobei die Düse an einer Grundfläche und der Dampfauslass an einer Deckfläche angeordnet sind.

Es ist weiter günstig, wenn der Dampfauslass eine Schikane aufweist. Somit ist gewährleistet, dass eine gegebenenfalls in der Verdampfungskammer kondensierte Flüssigkeit nicht aus dem Dampfauslass heraustropft. Dies ist vor allem dann von Bedeutung, wenn die Vorrichtung mit dem Dampfauslass nach unten hin orientiert ist und gegebenenfalls ein zu inspizierendes Objekt unterhalb der Bedampfungseinrichtung angeordnet ist. Dadurch wird vermieden, dass die Flüssigkeit auf das Objekt tropft und die Inspektion gestört wird. Nach unten hin orientiert ist die Bedampfungseinrichtung dann, wenn die in der Verdampfungskammer kondensierte Flüssigkeit einer Schwerkraft folgend zu jenem Ende der Verdampfungskammer fließt, an welchem der Dampfauslass angeordnet ist. Dies umfasst sowohl vertikale als auch schräg verlaufende Anordnungen.

Darüber hinaus ist es zweckmäßig, wenn die Düse mit mehreren Zuleitungen, insbesondere mit einer Flüssigkeitszuleitung, einer Sprühluftzuleitung und/oder einer Steuerluftzuleitung, in Fluidverbindung steht. Dadurch ist gewährleistet, dass sämtliche Fluide, welche für ein erfolgreiches Bedampfen erforderlich sind, zugeführt werden können. Diese umfassen üblicherweise die Flüssigkeit, eine Sprühluft und optional eine Steuerluft. Die Sprühluft dient hierbei im Wesentlichen zum Einsprühen der Flüssigkeit. Mit der Steuerluft kann das Einsprühen zusätzlich kontrolliert werden.

Schließlich ist es günstig, wenn die Zuleitungen jeweils eine Dosiereinrichtung aufweisen. Vorzugsweise umfassen die Dosiereinrichtungen jeweils zumindest ein Ventil. Dadurch können die Flüssigkeitszufuhr sowie die Zufuhr der Sprühluft und/oder der Steuerluft reguliert werden.

Die weitere Aufgabe wird unter Ausnützung der oben genannten Vorteile bei einer Verwendung einer derartigen Vorrichtung zur Inspektion von Fahrzeugteilen gelöst. Fahrzeugteile können insbesondere spiegelnde oder transparente Oberflächen aufweisen, wie dies beispielsweise bei Spiegeln, Windschutzscheiben oder lackierten Autoteilen der Fall ist.

Schließlich wird die verfahrensmäßige Aufgabe mit einem Verfahren nach Anspruch 11 gelöst.

Ein mit dem erfindungsgemäßen Verfahren erzielter Vorteil ist insbesondere darin zu sehen, dass der Dampf in geringem Abstand zum Objekt erzeugt wird. Der Dampf muss dementsprechend nicht über eine Leitung zum Objekt geführt werden, weshalb dieser eine vergleichsweise geringe Temperatur aufweisen kann. Darüber hinaus muss keine Leitung erwärmt werden, um ein vorzeitiges Kondensieren des Dampfes in der Leitung zu verhindern.

Um eine effiziente Inspektion der Oberfläche zu ermöglichen, kann vorgesehen sein, dass auf der Oberfläche des Objektes ein Bereich mit einem Durchmesser von zumindest 50 mm, insbesondere von 70 mm bis 80 mm, bedampft wird. Bei einem Bedampfen kondensiert der Dampf an der Oberfläche und bildet in diesem Bereich einen, vorzugsweise homogenen, Überzug aus einzelnen Flüssigkeitstropfen aus.

Mit Vorteil ist vorgesehen, dass eine Sprühluft und/oder die Flüssigkeit in die Verdampfungskammer eingebracht werden, wobei optional zuerst die Sprühluft für zumindest 25 ms, bevorzugt für etwa 50 ms, eingebracht wird, wonach die Flüssigkeit für etwa 100 ms bis 200 ms beigemischt wird. In der Regel werden die Sprühluft und/oder die Flüssigkeit in die Verdampfungskammer eingesprüht. Üblicherweise wird zunächst die Sprühluft für eine bestimmte Zeit eingebracht, wonach die Flüssigkeit beigemischt wird. Damit wird eine gleichmäßige Verteilung der Flüssigkeit in der Verdampfungskammer erreicht.

Ferner ist es günstig, wenn die Verdampfungskammer zuerst mit Sprühluft gefüllt wird, wonach in der Düse die Flüssigkeit mit der Sprühluft gemischt wird und ein derartiges Gemisch in die Verdampfungskammer eingebracht wird.

Um während des Betriebes der Vorrichtung auf eine Veränderung von Umweltbedingungen, wie etwa der Temperatur, der Luftfeuchtigkeit oder dergleichen, reagieren zu können, kann vorgesehen sein, dass Parameter der Bedampfungseinrichtung in Abhängigkeit von aus erfassten Messdaten ermittelten Qualitätskriterien reguliert werden. In der Regel können aus den Messdaten bzw. Bildern, welche mit der Messeinrichtung erfasst wurden, Qualitätskriterien, wie beispielsweise ein Bildkontrast, eine Bildhelligkeit, eine Linienerkennbarkeit und dergleichen ermittelt werden. Nun kann es zweckmäßig sein, wenn Parameter der Bedampfungseinrichtung so eingestellt werden, dass die Qualitätskriterien jeweils einen erwünschten Wert aufweisen bzw. erfüllt sind. Derartige Parameter können beispielsweise eine zugeführte Menge bzw. ein zugeführtes Volumen der Fluide sein, wobei jeder Parameter separat geregelt werden kann. Die zugeführten Fluide umfassen insbesondere die Flüssigkeit sowie die Sprüh- und Steuerluft. Optional und insbesondere für eine derartige Regelung kann vorgesehen sein, dass die Vorrichtung eine Steuereinheit aufweist, mit welcher die Parameter der Bedampfungseinrichtung einstellbar sind. Vorzugsweise ist eine Feedbackschleife vorgesehen, welche gegebenenfalls mit der Steuereinheit verbunden ist.

Ferner kann vorgesehen sein, dass zusätzliche Daten, insbesondere Klimadaten, wie beispielsweise Temperatur, Luftfeuchtigkeit und dergleichen, gemessen werden, um gegebenenfalls Parameter der Bedampfungseinrichtung zu korrigieren. Diese zusätzlichen Daten können hierbei für eine Korrektur der Parameter der Bedampfungseinrichtung verwendet werden. Mit Vorteil ist hierfür zumindest ein zusätzlicher Sensor, insbesondere ein Feuchtigkeitssensor und/oder ein Temperatursensor, vorgesehen.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung einer erfindungsgemäßen Vorrichtung;
Fig. 2 eine querschnittliche Darstellung einer Bedampfungseinrichtung.

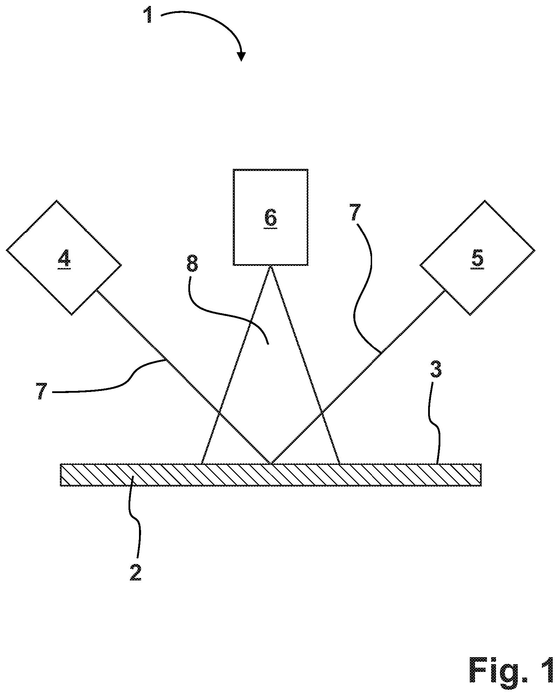

Fig. 1 zeigt eine schematische Darstellung einer erfindungsgemäßen Vorrichtung 1 und einer zu inspizierenden Oberfläche 2 eines Objektes 3. Im Wesentlichen umfasst die Vorrichtung 1 eine Beleuchtungseinrichtung 4, eine Messeinrichtung 5 und eine Bedampfungseinrichtung 6. Die Beleuchtungseinrichtung 4, die Messeinrichtung 5 und die Bedampfungseinrichtung 6 können beispielsweise auf einer gemeinsamen Basis angeordnet oder beliebig miteinander verbunden sein. Bevorzugt umfasst die Vorrichtung 1 einen Roboterarm, auf welchem Komponenten der Vorrichtung 1 montiert sind. Jene in Fig. 1 gezeigte Anordnung ist als beispielhaft anzusehen, da im Wesentlichen eine beliebige Anordnung einzelner Komponenten möglich ist.

Zweckmäßigerweise sind die Komponenten so angeordnet, dass von der Beleuchtungseinrichtung 4 ausgehend ein einfallender Lichtstrahl 7 auf das Objekt 3 gerichtet ist, welcher an der Oberfläche 2 reflektiert wird. Ein reflektierter Lichtstrahl 7 wird wiederum von der Messeinrichtung 5 erfasst. Wie aus Fig. 1 hervorgeht, ist der einfallende Lichtstrahl 7 so ausgerichtet, dass dieser in einem bedampften Bereich auf der Oberfläche 2 des Objektes 3 auftrifft. Ferner ist ein Dampf 8 dargestellt, welcher von der Bedampfungseinrichtung 6 austritt und einen bestimmten Bereich auf der Oberfläche 2 des Objektes 3 bedampft.

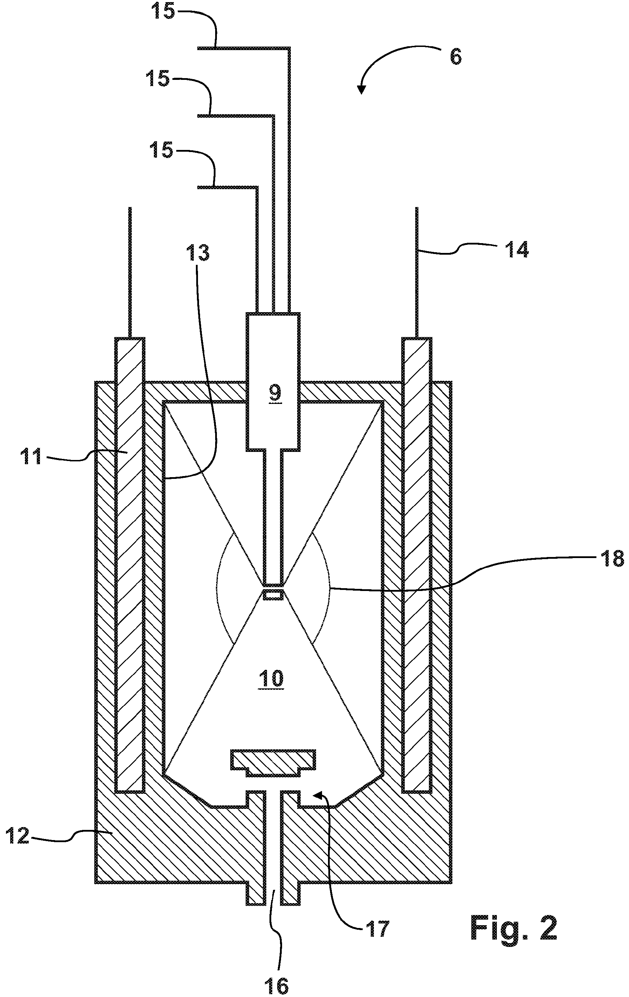

In Fig. 2 ist eine Bedampfungseinrichtung 6 dargestellt, welche eine Düse 9, eine Verdampfungskammer 10 und eine Heizeinrichtung 11 umfasst. Die Verdampfungskammer 10 weist im Wesentlichen eine Einhausung 12 auf, wobei ein Innenraum der Verdampfungskammer 10 seitlich durch eine oder mehrere Innenwände begrenzt ist. Bevorzugt ist die Verdampfungskammer 10 bzw. die Einhausung 12 zylinderförmig ausgebildet, wobei die Innenwand 13 einer inneren Mantelfläche entspricht.

Wie in Fig. 2 gezeigt, kann die Düse 9 so angeordnet sein, dass diese, insbesondere im Bereich einer Deckfläche, in die Verdampfungskammer 10 bzw. in den Innenraum hineinragt. Darüber hinaus ist die Heizeinrichtung 11 so positioniert, dass die Innenwand 13 zwischen der Heizeinrichtung 11 und dem Innenraum angeordnet ist. Die Heizeinrichtung 11 kann beispielsweise ein elektrisches Heizelement umfassen, welches einen elektrischen Anschluss 14 aufweist. In der dargestellten Ausführungsform ist die Heizeinrichtung 11 mit einem um den Innenraum der Verdampfungskammer 10 umlaufenden Heizelement ausgebildet. Hierfür ist das Heizelement in der Regel rohrförmig ausgebildet. Für eine Fluidzufuhr weist die Düse 9 mehrere, insbesondere drei, Zuleitungen 15 auf, wobei normalerweise eine Flüssigkeitszuleitung, eine Sprühluftzuleitung und eine Steuerluftzuleitung vorgesehen sind.

Darüber hinaus ist üblicherweise im Bereich einer Grundfläche ein Dampfauslass 16 vorgesehen, welcher in der Regel als Öffnung in der Einhausung 12 ausgebildet ist. Alternativ ist in der Grundfläche eine Öffnung vorgesehen, in welche ein Einsatz mit einem zentralen Kanal eingesetzt werden kann. Somit kann mittels unterschiedlicher Einsätze ein Durchmesser des Dampfauslasses 16 variiert werden. In der in Fig. 2 dargestellten Ausführungsform ist der Dampfauslass 16 jedoch einteilig mit der Einhausung 12 ausgebildet. An einem innenseitigen Ende des Dampfauslasses 16 ist eine Schikane 17 vorgesehen, in welcher sich eine kondensierte Flüssigkeit ansammeln kann, wenn die Bedampfungseinrichtung 6, wie in Fig. 2 gezeigt, mit dem Dampfauslass 16 nach unten orientiert angeordnet ist.

Um eine Oberfläche 2 zu bedampfen, wird zuerst eine Sprühluft durch die Sprühluftzuleitung in die Düse 9 und folglich in die Verdampfungskammer 10 eingebracht. Danach wird durch die Flüssigkeitszuleitung eine Flüssigkeit, wie etwa Wasser oder Ethanol, beigemengt und ebenfalls durch die Düse 9 in die Verdampfungskammer 10 eingebracht. Es hat sich bewährt, wenn hierbei die Sprühluft für zumindest 25 ms, bevorzugt für etwa 50 ms eingebracht wird. Die Flüssigkeit wird hierbei üblicherweise zerstäubt und radial in einem bestimmten Sprühwinkel 18 in den Innenraum der Verdampfungskammer 10 eingesprüht. Der Sprühwinkel 18 ist mit Vorteil so eingestellt, dass die Flüssigkeit bzw. feine Flüssigkeitströpfchen großflächig auf die Innenwand 13 aufgebracht werden. Die Flüssigkeitströpfchen werden verdampft, sobald diese auf der durch die Heizeinrichtung 11 erhitzten Innenwand 13 auftreffen. Der erzeugte Dampf 8 strömt dann durch den Dampfauslass 16 aus der Verdampfungskammer 10. Hierbei ist die Bedampfungseinrichtung 6 bevorzugt so angeordnet, dass der Dampf 8 die Oberfläche 2 des Objektes 3 durch den Dampfauslass 16 unmittelbar bedampft und somit ein Überzug aus Flüssigkeitströpfchen aufgebracht werden kann.

Um eine effiziente Inspektion einer Oberfläche 2 zu ermöglichen, wird üblicherweise zuerst die Sprühluft in die Verdampfungskammer 10 eingebracht. In einem weiteren Schritt wird die Flüssigkeit in der Düse 9 der Sprühluft beigemengt und ebenfalls in die Verdampfungskammer 10 eingebracht. Die Flüssigkeit wird über den Sprühauslass oder die Sprühauslässe der Düse 9 radial abgesprüht. Hierbei wird eine Vielzahl von Flüssigkeitströpfchen auf die Innenwand 13 der Verdampfungskammer 10 aufgebracht. Die Düse 9 weist hierfür mehrere Sprühauslässe, welche radial umlaufend angeordnet sind, oder einen radial umlaufenden Sprühauslass auf. Darüber hinaus wird die Innenwand 13 der Verdampfungskammer 10 mittels Heizeinrichtung 11 erwärmt, sodass die Flüssigkeitströpfchen im Wesentlichen unmittelbar nach einem Auftreffen auf der Innenwand 13 verdampfen. Der so erhaltene Dampf 8 wird durch den Dampfauslass 16 aus der Verdampfungskammer 10 und im Wesentlichen direkt auf die Oberfläche 2 des Objektes 3 geführt, um diese zu bedampfen.

Beim Bedampfen der Oberfläche 2 wird der Dampf 8 also auf die Oberfläche 2 geführt, wo dieser kondensiert und den Überzug aus Flüssigkeitströpfchen ausbildet. Dadurch wird die Oberfläche 2, insbesondere eine transparente oder spiegelnde Oberfläche 2 trübe, wodurch reflektiertes Licht durch die Messeinrichtung 5 erfasst werden kann, was letztlich die effiziente Inspektion der Oberfläche 2 hinsichtlich Profilvermessung sowie Defekten, wie beispielsweise Kratzern, ermöglicht.

## Patentansprüche

1. Vorrichtung (1) zur Inspektion einer Oberfläche (2) eines Objektes (3), insbesondere einer spiegelnden oder transparenten Oberfläche (2), umfassend eine Beleuchtungseinrichtung (4), mit welcher die Oberfläche (2) beleuchtbar ist, eine Messeinrichtung (5), welche an der Oberfläche (2) reflektiertes Licht erfasst, und eine Bedampfungseinrichtung (6), welche zum Bedampfen der Oberfläche (2) ausgebildet ist, wobei die Bedampfungseinrichtung (6) eine Düse (9), eine Verdampfungskammer (10) mit einer Einhausung (12) und eine Heizeinrichtung (11) aufweist, **dadurch gekennzeichnet, dass** die Heizeinrichtung (11) zur Erwärmung der Einhausung (12) positioniert ist und die Düse (9) in die Verdampfungskammer (10) ragt, um eine Flüssigkeit in diese einzubringen, wobei die Düse (9) mit zumindest einem Sprühauslass so ausgebildet ist, dass die Flüssigkeit beim Einbringen in die Verdampfungskammer (10) zerstäubt und an eine Innenwand (13) gesprüht wird, und wobei die Verdampfungskammer (10) einen Dampfauslass (16) aufweist, durch den in der Verdampfungskammer (10) entstandener Dampf direkt auf die Oberfläche des Objektes (3) aufbringbar ist.

2. Vorrichtung (1) nach Anspruch 1, **dadurch gekennzeichnet, dass** die Beleuchtungseinrichtung (4) einen Lichtstrahl (7) bereitstellt, der zur Messung justierbar ist.

3. Vorrichtung (1) nach einem der Ansprüche 1 oder 2, **dadurch gekennzeichnet, dass** die Heizeinrichtung (11) zumindest ein rohr- und/oder zylinderförmiges Heizelement umfasst.

4. Vorrichtung (1) nach einem der Ansprüche 1 bis 3, **dadurch gekennzeichnet, dass** die Düse (9) zumindest einen Sprühauslass aufweist, welcher im Wesentlichen senkrecht zur Längsachse der Düse (9) angeordnet ist.

5. Vorrichtung (1) nach einem der Ansprüche 1 bis 4, **dadurch gekennzeichnet, dass** die Düse (9) und der Dampfauslass (16) an gegenüberliegenden Seiten der Verdampfungskammer (10) angeordnet sind.

6. Vorrichtung (1) nach einem der Ansprüche 1 bis 5, **dadurch gekennzeichnet, dass** die Verdampfungskammer (10) zylinderförmig ausgebildet ist, wobei die Düse (9) an einer Grundfläche und der Dampfauslass (16) an einer Deckfläche angeordnet sind.

7. Vorrichtung (1) nach einem der Ansprüche 1 bis 6, **dadurch gekennzeichnet, dass** der Dampfauslass (16) eine Schikane (17) aufweist.

8. Vorrichtung (1) nach einem der Ansprüche 1 bis 7, **dadurch gekennzeichnet, dass** die Düse (9) mit mehreren Zuleitungen (15), insbesondere mit einer Flüssigkeitszuleitung, einer Sprühluftzuleitung und/oder einer Steuerluftzuleitung, in Fluidverbindung steht.

9. Vorrichtung (1) nach Anspruch 8, **dadurch gekennzeichnet, dass** die Zuleitungen (15) jeweils eine Dosiereinrichtung aufweisen.

10. Verwendung einer Vorrichtung (1) nach einem der Ansprüche 1 bis 9 zur Inspektion von Fahrzeugteilen.

11. Verfahren zur Inspektion einer Oberfläche (2) eines Objektes (3), insbesondere einer spiegelnden oder transparenten Oberfläche (2), bevorzugt mit einer Vorrichtung (1) nach einem der Ansprüche 1 bis 9, wobei die Oberfläche (2) beleuchtet, ein an der Oberfläche (2) reflektiertes Licht mit einer Messeinrichtung (5) erfasst und die Oberfläche (2) mittels einer Bedampfungseinrichtung (6) bedampft wird, um eine Schicht aus Flüssigkeitströpfchen auf dieser zu erzeugen, wobei eine Flüssigkeit in eine Verdampfungskammer (10) mit einer Einhausung (12) eingebracht wird, **dadurch gekennzeichnet, dass** die Einhausung (12) erwärmt und die Flüssigkeit zerstäubt auf eine Innenwand (13) der Einhausung (12) gesprüht wird, wonach die Flüssigkeit verdampft und ein Dampf (8) über einen Dampfauslass (16) aus der Verdampfungskammer (10) geführt und an der Oberfläche (2) des Objektes (3) kondensiert wird.

12. Verfahren nach Anspruch 11, **dadurch gekennzeichnet, dass** auf der Oberfläche (2) des Objektes (3) ein Bereich mit einem Durchmesser von zumindest 50 mm, insbesondere von 70 mm bis 80 mm, bedampft wird.

13. Verfahren nach Anspruch 11 oder 12, **dadurch gekennzeichnet, dass** eine Sprühluft und/oder die Flüssigkeit in die Verdampfungskammer (10) eingebracht werden, wobei optional zuerst die Sprühluft für zumindest 25 ms, bevorzugt für etwa 50 ms, eingebracht wird, wonach die Flüssigkeit für etwa 100 ms bis 200 ms beigemischt wird.

14. Verfahren nach einem der Ansprüche 11 bis 13, **dadurch gekennzeichnet, dass** Parameter der Bedampfungseinrichtung (6) in Abhängigkeit von aus erfassten Messdaten ermittelten Qualitätskriterien reguliert werden.

15. Verfahren nach einem der Ansprüche 11 bis 14, **dadurch gekennzeichnet, dass** zusätzliche Daten, insbesondere Klimadaten, wie beispielsweise Temperatur, Luftfeuchtigkeit und dergleichen, gemessen werden, um gegebenenfalls Parameter der Bedampfungseinrichtung (6) zu korrigieren.

## Claims

1. Apparatus (1) for inspecting a surface (2) of an object (3), in particular a reflective or transparent surface (2), comprising an illuminating device (4), with which the surface (2) can be illuminated, a measuring device (5), which detects reflected light on the surface (2), and a vapour deposition device (6), which is designed to deposit vapour on the surface (2), wherein the vapour deposition device (6) includes a nozzle (9), an evaporation chamber (10) with a housing (12), and a heater (11), **characterized in that** the heater (11) is positioned so as to warm the housing (12), and the nozzle (9) protrudes into the evaporation chamber (10) to introduce a liquid into said chamber, wherein the nozzle (9) is constructed with at least one spray outlet such that upon introduction into the evaporation chamber (10) the liquid is vaporised and spayed against an internal wall (13), and wherein the evaporation chamber (10) has a vapour outlet (16) through which vapour formed in the evaporation chamber (10) can be applied directly onto the surface of the object (3).

2. Apparatus (1) according to Claim 1, **characterized in that** the illuminating device (4) provides a light beam (7) that can be adjusted to perform the measurement.

3. Apparatus (1) according to one of Claims 1 or 2, **characterized in that** the heater (11) comprises at least one tubular and/or cylindrical heating element.

4. Apparatus (1) according to any one of Claims 1 to 3, **characterized in that** the nozzle (9) has at least one spray outlet, which is arranged substantially perpendicularly to the nozzle (9).

5. Apparatus (1) according to any one of Claims 1 to 4, **characterized in that** the nozzle (9) and the vapour outlet (16) are arranged on opposite sides of the evaporation chamber (10).

6. Apparatus (1) according to any one of Claims 1 to 5, **characterized in that** the evaporation chamber (10) is constructed as a cylinder, wherein the nozzle (9) is arranged on a base surface and the vapour outlet (16) is arranged on a cover surface.

7. Apparatus (1) according to any one of Claims 1 to 6, **characterized in that** the vapour outlet (16) includes a chicane (17).

8. Apparatus (1) according to any one of Claims 1 to 7, **characterized in that** the nozzle (9) is in fluid communication with a plurality of feed lines (15), in particular a liquid feed line, a spray air feed line and/or a control air feed line.

9. Apparatus (1) according to Claim 8, **characterized in that** the feed lines (15) each have a metering device.

10. Use of an apparatus (1) according to any one of Claims 1 to 9 for inspecting motor vehicle parts.

11. Method for inspecting a surface (2) of an object (3), in particular a reflective or transparent surface (2), preferably with an apparatus (1) according to any one of Claims 1 to 9, wherein the surface (2) is illuminated, a light reflected on the surface (2) is captured with a measuring device (5), vapour is deposited on the surface (2) by means of a vapour deposition device (6) to create a layer of liquid droplets thereon, wherein a liquid is introduced into an evaporation chamber (10) having a housing (12), **characterized in that** the housing (12) is warmed and the liquid is vaporised and sprayed onto an internal wall (13) of the housing (12), after which the liquid is vaporised and a vapour (8) is guided out of the evaporation chamber (10) via a vapour outlet (16) and condensed on the surface (2) of the object (3).

12. Method according to Claim 11, **characterized in that** vapour is deposited on a region of the surface (2) of the object (3) with a diameter of at least 50 mm, in particular from 70 mm to 80 mm.

13. Method according to Claim 11 or 12, **characterized in that** a spray air and/or the liquid is/are introduced into the evaporation chamber (10), wherein optionally first the spray air is introduced for at least 25 ms, preferably for about 50 ms, after which the liquid is added for about 100 ms to 200 ms.

14. Method according to any one of Claims 11 to 13, **characterized in that** parameters of the vapour deposition device (6) can be regulated depending on quality criteria determined from captured measurement data.

15. Method according to any one of Claims 11 to 14, **characterized in that** additional data, in particular ambient data such as temperature, atmospheric humidity and the like, are measured in order to correct parameters of the vapour deposition device (6) if necessary.

## Revendications

1. Dispositif (1), destiné à inspecter une surface (2) d'un objet (3), notamment une surface (2) réfléchissante ou transparente, comprenant un système d'éclairage (4), à l'aide duquel la surface (2) peut être éclairée, un système de mesure (5), lequel détecte de la lumière réfléchie sur la surface (2) et un système de vaporisation (6), lequel est conçu pour vaporiser la surface (2), le système de vaporisation (6) comportant une buse (9), une chambre d'évaporation (10) pourvue d'une enceinte (12) et un système de chauffage (11), **caractérisé en ce que** le système de chauffage (11) est positionné de sorte à chauffer l'enceinte (12) et la buse (9) saillit dans la chambre d'évaporation (10), pour introduire un liquide dans celle-ci, la buse (9) étant conçue avec au moins une sortie de vaporisation, de telle sorte que lors de l'introduction dans la chambre d'évaporation (10), le liquide s'atomise et soit vaporisé sur une paroi intérieure (13) et la chambre d'évaporation (10) comportant une sortie de vapeur (16), à travers laquelle de la vapeur produite dans la chambre d'évaporation (10) est applicable directement sur la surface de l'objet (3).

2. Dispositif (1) selon la revendication 1, **caractérisé en ce que** le système d'éclairage (4) met à disposition un faisceau lumineux (7) qui est ajustable pour le processus de mesure.

3. Dispositif (1) selon l'une quelconque des revendications 1 ou 2, **caractérisé en ce que** le système de chauffage (11) comprend au moins un élément chauffant de forme tubulaire et /ou cylindrique.

4. Dispositif (1) selon l'une quelconque des revendications 1 à 3, **caractérisé en ce que** la buse (9) comporte au moins une sortie de vaporisation, laquelle est placée sensiblement à la perpendiculaire de l'axe longitudinal de la buse (9).

5. Dispositif (1) selon l'une quelconque des revendications 1 à 4, **caractérisé en ce que** la buse (9) et la sortie de vapeur (16) sont placées sur des faces opposées de la chambre d'évaporation (10).

6. Dispositif (1) selon l'une quelconque des revendications 1 à 5, **caractérisé en ce que** la chambre d'évaporation (10) est conçue de forme cylindrique, la buse (9) étant placée sur une surface de base et la sortie de vapeur (16) étant placée sur une surface de recouvrement.

7. Dispositif (1) selon l'une quelconque des revendications 1 à 6, **caractérisé en ce que** la sortie de vapeur (16) comporte une chicane (17).

8. Dispositif (1) selon l'une quelconque des revendications 1 à 7, **caractérisé en ce que** la buse (9) se trouve en liaison fluidique avec plusieurs conduites d'alimentation (15), notamment avec une conduite d'alimentation de liquide, une conduite d'alimentation d'air de vaporisation et / ou une conduite d'alimentation d'air de commande.

9. Dispositif (1) selon la revendication 8, **caractérisé en ce que** les conduites d'alimentation (15) comportent chacune un système de dosage.

10. Utilisation d'un dispositif (1) selon l'une quelconque des revendications 1 à 9, pour inspecter des pièces de véhicules.

11. Procédé, destiné à inspecter une surface (2) d'un objet (3), notamment une surface (2) réfléchissante ou transparente, de préférence à l'aide d'un dispositif (1) selon l'une quelconque des revendications 1 à 9, lors duquel l'on éclaire la surface (2), l'on détecte une lumière réfléchie sur la surface (2) à l'aide d'un système de mesure (5) et l'on vaporise la surface (2) au moyen d'un système de vaporisation (6), pour générer sur celle-ci une couche de gouttes de liquide, lors duquel un liquide est introduit dans une chambre d'évaporation (10) dotée d'une enceinte (12), **caractérisé en ce que** l'on chauffe l'enceinte (12) et l'on vaporise le liquide sous forme atomisée sur une paroi intérieure (13) de l'enceinte (12), suite à quoi l'on vaporise le liquide et une vapeur (8) est guidée par l'intermédiaire d'une sortie de vapeur (16) hors de la chambre d'évaporation (10) et condensée sur la surface (2) de l'objet (3).

12. Procédé selon la revendication 11, **caractérisé en ce que** sur la surface (2) de l'objet (3), l'on vaporise une zone d'un diamètre d'au moins 50 mm, notamment de 70 mm à 80 mm.

13. Procédé selon la revendication 11 ou 12, **caractérisé en ce que** l'on introduit un air atomisé et / ou le liquide dans la chambre d'évaporation (10), en option, l'on introduit d'abord l'air atomisé à au moins 25 ms, de préférence à au moins 50 ms, suite à quoi, l'on ajoute le liquide à au moins de 100 ms à 200 ms.

14. Procédé selon l'une quelconque des revendications 11 à 13, **caractérisé en ce que** l'on régule des paramètres du système de vaporisation (6) en fonction de critères de qualité déterminés à partir de données de mesures détectées.

15. Procédé selon l'une quelconque des revendications 11 à 14, **caractérisé en ce que** l'on mesure des données additionnelles, notamment des données climatiques, telles que par exemple la température, l'humidité de l'air et analogues, pour corriger le cas échéant des paramètres du système de vaporisation (6).
